# EUROPEAN PATENT SPECIFICATION

(11) **EP 3 766 353 B1**
(45) Date of publication and mention of the grant of the patent: **22.01.2025**
(21) Application number: 19767550.7
(22) Date of filing: 08.03.2019
(51) Int. Cl.: A23G 9/00, A23G 9/32, A23G 9/34, A23G 9/52, A23G 9/04, A23G 9/42

(54) **ICE CREAM AND METHOD FOR MANUFACTURING SAME**
EISCREME UND VERFAHREN ZUR HERSTELLUNG DAVON
CRÈME GLACÉE ET SON PROCÉDÉ DE FABRICATION

(30) Priority: 14.03.2018 JP 2018047149
(43) Date of publication of application: 20.01.2021
(73) Proprietor: Yanmar Power Technology Co., Ltd., Osaka-shi Osaka 530-0013 (JP)
(72) Inventor: YAMAGUCHI Miki, Osaka-shi, Osaka 530-0013 (JP); TSUCHIYA Kuniyasu, Osaka-shi, Osaka 530-0013 (JP)
(74) Representative: Poindron, Cyrille
(86) International application number: PCT/JP2019/009494
(87) International publication number: WO 2019/176812

(56) References cited:
- WO-A1-2012/029486
- WO-A1-2014/199961
- JP-A- 2009 240 198
- JP-B2- 5 840 904
- JP-B2- 6 010 006
- KR-B1- 100 796 444
- US-A1- 2011 236 553
- CHIWAWA NO MAMA: "The mysterious ice cream made from rice gel that does not melt easily is safe and secure", CHIHUAHUA - BLOG OF A BLOGGER WHO LOVES VEHICLES TO LIVE WITH CHIHUAHUA, 14 February 2018 (2018-02-14), pages 1 - 4, XP009523412, Retrieved from the Internet <URL:http://chiwamama.com/2018/02/rice-jelly-icecream.html> [retrieved on 20190521]
- ANONYMOUS: "Is rice gel "delicious"-"rice gel bread" and "rice gel ice" have been sampled", 10 March 2017 (2017-03-10), pages 1 - 3, XP055640366, Retrieved from the Internet <URL:https://news.mynavi.jp/article/20170310-rice_gel> [retrieved on 20190521]
- KENICHI HOUJYO , JUNICHI SUGIYAMA: "Feature of Physical Property on Rice Gel and its Application", THE JAPANESE SOC. FOR FOOD SCIENCE AND TECHNOLOGY, vol. 64, no. 9, 2017, pages 483 - 489, XP055737463, ISSN: 1341-027X, DOI: : 10.3136/nskkk.64.483

## Description

### TECHNICAL FIELD

The present invention relates to ice cream and a method of manufacturing the same and soft serve ice cream mix by use of high-amylose rice that has been cooked.

### BACKGROUND ART

Ice cream such as soft serve ice cream is food of personal preference, and has been eaten by men and women of all ages, and recently for all seasons. Various kinds of ice cream have appeared on the markets. Accordingly, there is a need for ice cream to be creative with taste, appearance, and oral texture so as to attract more consumers.

For example, Patent Literature 1 discloses that more than 0.5 times the amount of water is added to high-amylose rice and subjected to a primary heating treatment; that the resultant gelatinized material is subjected to mechanical mixing treatment; and that the resultant rice gel is subjected to processing operation such as heating and cooling to manufacture processed food material. Furthermore, the Example of Patent Literature 1 discloses that the resultant processed food material is used to manufacture ice cream.

WO 2012/029486 discloses an edible powder useful for processed food. The edible powder is obtained from rice, wherein the rice is high amylose rice and is used to prepare ice cream.

### CITATION LIST

### Patent Literature

Patent Literature 1: PCT International Publication No. 2014/199961

### DISCLOSURE OF INVENTION

### PROBLEMS TO BE SOLVED BY THE INVENTION

Patent Literature 1 describes that the ice cream manufactured in the Example was very smooth, had an appearance like very fine-textured milk ice cream, and had eating quality with good melt in the mouth and richness but with plain (light) aftertaste. In addition, such ice cream is also described as not forming a complete liquid at ordinary temperature though having good melt in the mouth. However, the taste, oral texture, and the like of the ice cream manufactured in the Example in Patent Literature 1 lacks impact to an extent to attract customers, and has been a room for improvement due to being no more than an alternative to conventional ice cream.

Therefore, an object of the present invention is to provide ice cream imparted with a new oral texture.

Additionally, another object of the present invention is to provide a method of manufacturing soft serve ice cream with a new oral texture, and soft serve ice cream mix to be used in the manufacture of such soft serve ice cream.

### MEANS FOR SOLVING THE PROBLEMS

The present invention is defined by the claims. According to the present invention, provided is ice cream high-amylose cooked rice having gelatinized form, wherein a content ratio of the high-amylose cooked rice is 1.5 to 4.5% by mass.

Moreover, according to the present invention, provided is a method of manufacturing soft serve ice cream of any one of claims 1 to 3, comprising: heating to solate a gelatinous product of cooked high-amylose rice, at a temperature of 80 to 90°C for one or more minutes to obtain a solated product, and mixing the solated product with other raw materials for the soft serve ice cream at a high speed to obtain a soft serve ice cream mix.

A preferred aspect of the manufacturing method of the present invention is an aspect further including freezing after the mixing, in which the soft serve ice cream mix is cooled at a temperature of -10 to -4°C while mixed at a low speed.

Furthermore, according to the present invention, provided is a soft serve ice cream mix containing a stirring-gelled product of high-amylose rice that has been cooked, in which the content ratio of the stirring-gelled product is 10-30% by mass.

Definition and standards of ice cream are defined under the Ministerial Ordinance concerning Compositional Standards etc. for Milk and Milk Products (hereinafter referred to as the Ministerial Ordinance concerning Milk) by the Japanese Ministry of Health, Labour, and Welfare. In this ministerial ordinance concerning milk, ice cream is defined as "a product produced by freezing a material that is processed from milk or food manufactured from milk as a raw material, or includes it as a main raw material, with 3.0% or more milk solids (except for fermented milk)". Ice cream is a concept encompassing ice cream (15.0% or more milk solids including 8.0% or more milk fat), ice milk (10.0% or more milk solids including 3.0% or more milk fat), and lacto ice (3.0% or more milk solids).

Soft serve ice cream is defined as "an ice cream that is semi-frozen iced and made creamy" (Kojien, 4th edition, Iwanami Shoten, Publishers, 1991), but herein it shall mean ice cream that is semi-frozen iced and made creamy. That is, ice cream herein is a concept encompassing soft serve ice cream. Ice cream other than soft serve ice cream shall be referred to as hard ice cream.

In addition, the term "gel" means a state of sol lacking flowability and being solidified (Daijirin, 3rd edition.); in other word, gel and sol are distinguished by whether it exhibits flowability or not.

### EFFECT OF THE INVENTION

The ice cream of the present invention contains high-amylose rice, that has been cooked, in a specific amount. Thus, the ice cream of the present invention has a springy oral texture.

### DESCRIPTION OF EMBODIMENTS

The term "springy (elastic and viscous)" herein refers to oral texture combining elasticity and stickiness as that of rice cake.

The ice cream of the present invention has a characteristic of containing high-amylose rice that has been cooked.

### [High-amylose rice that has been cooked]

High-amylose rice means rice having a high amylose content. Amylose content means a content of amylose included in starch. The amylose content of high-amylose rice is typically 25% or more by mass, but somewhat varies depending on weather and the like. The varieties of high-amylose rice may be either Japonica or Indica, and include, for example, Momi-roman, Yume-toiro, Hoshi-yutaka, Hoshi-nishiki, Mire-nishiki, Chugoku 134, Koshino-kaori, Mizuho-chikara. The variety of high-amylose rice is preferably Momi-roman or Yume-toiro. High-amylose rice may be a mixture of two or more types different in the degree of rice polishing, the variety, and the like.

The present invention uses high-amylose rice that has been cooked. Rice cooking is performed so as to yield gelatinized cooked rice.

In rice cooking, the degree of rice polishing of high-amylose rice, which is a raw material, is not particularly limited, and high-amylose rice may be any form as brown rice, semi-polished rice, or white rice. In view of imparting a better appearance of ice cream, white rice is preferable. In view of providing improved nutritional value of ice cream and allowing omission of a rice polishing process, brown rice is preferable. High-amylose rice can also possibly be subjected to rice cooking in a form of rice powder, but in view of saving cost and effort of a milling processing, a form other than rice powder is preferable.

The amount of water for rice cooking is preferably over once the amount (weight) of high-amylose rice, more preferably 1-6 times the amount, and particularly preferably 2-4 times the amount. If the water content is too low, the degree of viscosity of cooked rice thus obtained will be excessively high, leading to difficulty in mechanical stirring described later. If the water content is too high, the degree of a new oral texture to be provided for ice cream is likely to be insufficient.

In rice cooking, a third component other than high-amylose rice and water may be used as needed, but the third component is preferably rather not used in view of manufacturing cost.

Before rice cooking, high-amylose rice may be immersed into water. The immersion time is not particularly limited, but typically about 10-120 minutes.

For rice cooking, known rice-cooking means can be used such as a rice cooker, a pan, a pressure pan, or an electromagnetic cooker (e.g., a microwave).

The conditions of rice cooking such as temperature and time vary depending on type of rice-cooking means, and is difficult to identify unambiguously, but is adjusted appropriately to a condition in which gelatinization sufficiently proceeds without burning and sticking high-amylose rice. The conditions of rice cooking may be adjusted in accordance with the mode of condition integrated into rice-cooking means (e.g., a rice gruel mode). The lower limit of temperature is typically 25°C or more, preferably 60°C or more, and particularly preferably 80°C or more. The upper limit is preferably 130°C or less, and more preferably 100°C or less. Rice-cooking may be performed along with not only heating but also pressurization, and the temperature condition in this case may also be out of the range described above.

The cooked rice thus obtained has a gelatinized form. It is important that the gelatinized cooked rice is used for manufacture of ice cream after the cooked rice is mechanically stirred to cause phase transition from a gelatinized form to a gelled form, in order to effectively provide ice cream with a springy new oral texture. The cooked rice after phase transition to gel is referred to as stirring-gelled product.

Prior to mechanical stirring, cooked rice may be cooled. Cooling can provide a harder stirring-gelled product with a lower degree of viscosity. The cooling temperature is typically ordinary temperature (e.g., 15 to 30°C).

Mechanical stirring means stirring that can destroy tissue by physical motion. Mechanical stirring should just be performed using a known stirring device such as a food processor, a homogenizer, a mixer, a kneader, a kneading machine, or an extruder. A stirring device with large torque is preferable because stirring will not be prevented even if degree of viscosity of gelatinized material gains during mechanical stirring. Examples of stirring devices with large torque include a food processor (Cuisinart DLC-8P2J).

The conditions of mechanical stirring can be determined appropriately depending on state of gelatinization of cooked rice, type of stirring devices, and the like. For example, in rotation speed at no load, the condition is preferably 1,000-3,000 rpm, more preferably 1,200-2,000 rpm, and even more preferably 1,500-1,800 rpm. When a food processor (Cuisinart DLC-8P2J) is used as a stirring device, power consumption is preferably 320-350 W.

In this way, a stirring-gelled product of high-amylose rice that has been cooked is obtained. The stirring-gelled product exhibits good texture and moderate hardness as a gel. Here, good texture means texture obtained in a state of low tan δ described later. In addition, moderate hardness as a gel means, for example, hardness to an extent softer than agar.

Hardness of the stirring-gelled product can be comprehensively evaluated by complex elastic modulus. Complex elastic modulus G* is a sum of elasticity component and viscosity component and means general hardness, as described in Japanese Patent No. 5840904. Complex elastic modulus G* is specifically shown with a length of vector as set with storage elastic modulus G' as X-axis and loss elastic modulus G" as Y-axis. Storage elastic modulus G' is information on elasticity. Loss elastic modulus G" is information on viscosity.

The complex elastic modulus G* of the stirring-gelled product used in the present invention is preferably 1000Pa or more, and particularly preferably 1500Pa or more. If the complex elastic modulus G* is too low, the hardness of the stirring-gelled product is so insufficient that oral texture of ice cream manufactured with such a stirring-gelled product is likely to be almost the same as that of conventional products, in the cases of certain types, tastes, and the like of the ice cream. If the complex elastic modulus G* is too high, the stirring-gelled product is excessively hard, so that another material and the stirring-gelled product cannot be homogenously mixed. Even if providing homogeneous mixing, inconvenience is likely to arise such as a stirring device being overloaded.

Texture of the stirring-gelled product used in the present invention can be comprehensively evaluated with tan δ, a ratio of viscosity/elasticity. Lower tan δ indicates higher characteristics as an elastic body. This means that the characteristics as an elastic body, in which deformation is generated depending on applied force but is restored to the original form upon removal of the applied force, is made higher. In contrast, higher tan δ indicates higher characteristics as a viscous body. This means that the characteristics as a viscous body, in which deformation is generated depending on applied force and is not restored to the original form even after removal of the applied force, is made higher.

A viscosity/elasticity ratio, tan δ, is specifically calculated from the formula tan δ = G"/G'. δ means an angle between a vector of complex elastic modulus G* and storage elastic modulus G' (X-axis).

The viscosity/elasticity ratio, tan δ, of the stirring-gelled product is preferably 0.3 or less, and particularly preferably 0.2 or less. If the viscosity/elasticity ratio, tan δ, is too high, i.e., the characteristics as a viscous body are dominant, such a stirring-gelled product will take a sol form (a paste form). A gel-form material having such paste form is likely to be unable to sufficiently provide a springy oral texture for ice cream.

The stirring-gelled product can retain good hardness and texture also after storage. For example, even after a lapse of about 3 days to 2 weeks at 4 to 25°C, the good hardness and texture described above is to be retained.

### [Manufacture of ice cream]

In the ice cream of the present invention, a stirring-gelled product of high-amylose rice that has been cooked and a known raw material for ice cream are used to manufacture the ice cream of the present invention.

Examples of known raw materials for ice cream include water, milk or dairy products, sweeteners, and fats and oils. Furthermore, there may be used, as needed, known additives such as an emulsifier, a stabilizer, a flavor, and a dye; ingredients such as fruit flesh; and sub-materials such as fruit juice.

Examples of milk include cow milk and fat-free milk (skim milk). Examples of dairy products include powdered fat-free milk, powdered formula milk, cream, condensed milk, and fermented milk. Either or both of milk and a dairy product may be used.

Sweeteners include saccharides and derivatives thereof, and non-carbohydrate sweeteners. Saccharides and derivatives thereof shall also include rare sugars. Rare sugar is defined as "a generic name of monosaccharides with low abundance in nature and derivatives thereof" (Kojien, 7th Edition, Iwanami Shoten, Publishers, 2018).

Specific examples of sweeteners include saccharides such as sugar (sucrose), grape sugar (D-glucose), fruit sugar (D-fructose), malt sugar (maltose), milk sugar (lactose), D-galactose, D-mannose, D-ribose, D-xylose, L-arabinose, monosaccharides categorized as rare sugars (L-allose, L-gulose, L-glucose, L-galactose, L-altrose, L-idose, L-mannose, L-talose, D-talose, D-idose, D-altrose, D-gulose, D-allose, L-psicose, L-sorbose, L-fructose, L-tagatose, D-tagatose, D-sorbose, D-psicose, L-ribose), trehalose, dextrin, thick malt syrup, and isomerized sugar; sugar alcohols such as sorbitol, maltitol, lactitol, and sugar alcohols derived from monosaccharides categorized as rare sugars (such as xylitol and erythritol); and non-carbohydrate sweeteners such as aspartame, sucralose, acesulfame K, stevioside, thaumatin, glycyrrhizin, saccharin, and dihydrochalcone.

Examples of fats and oils include plant fats and oils such as coconut oil, palm oil, palm kernel oil, soybean oil, and rapeseed oil; and animal fats and oils such lard, beef fat, and fish oil. Of course, milk fat such as butter or cream can be used.

Examples of emulsifiers include glycerin fatty acid ester, sorbitan fatty acid ester, sucrose fatty acid ester, and propylene glycol fatty acid ester.

Examples of stabilizers include plant-based stabilizers (polysaccharide thickeners) such as carrageenan, guar gum, locust bean gum, (microcrystalline) cellulose, pectin, starch, and acacia gum; animal-based stabilizers such as gelatin, casein, and casein Na; and synthetic stabilizers such as carboxymethyl cellulose (CMC) and methyl cellulose.

The stirring-gelled product used in the present invention has an effect of increasing degree of viscosity of an entire raw material mixture. That is, adjustment of elasticity and viscosity of the entire raw material mixture has an effect of suppressing its deformation. In particular, in the case of manufacturing soft serve ice cream, although a stabilizer is commonly blended so as to enable to maintain a spiral shape, blending of the stirring-gelled product as in the present invention allows to maintain a shape of soft serve ice cream without using any stabilizer, or with a little amount of usage even if using it.

In the present invention, the stirring-gelled product and other raw materials may be combined one-by-one, but an ice-cream mix, in which raw materials other than the stirring-gelled product are premixed or the like, may be used to combine the ice-cream mix and the stirring-gelled product. For the ice-cream mix, it is fine to use a commercial product. Examples of commercial products of ice-cream mix include Hokkaido Softcream, Sofore, Royal Vanilla, Raw Milk Excellent 5, Mucre, Neo Deluxe Vanilla (all manufactured by Nissei Co., Ltd.)

The blending amount of each raw material should just be appropriately determined depending on types and tastes of ice cream of interest, but regarding the stirring-gelled product, it is important to blend in such amount that provides a high-amylose rice ratio of 1.5 to 4.5% by mass in total raw materials. With the blending amount of the stirring-gelled product being excessively low and the high-amylose rice ratio being excessively low, oral texture of the ice cream thus manufactured will be almost the same as that of conventional ice cream. With the blending amount of the stirring-gelled product being excessive, it will be difficult to homogenously mix another raw material and the stirring-gelled product.

The stirring-gelled product is preferably blended in such amount that provides a high-amylose rice ratio of 1.5 to 4.5% by mass in total raw materials. With blending such amount of the stirring-gelled product, ice cream finally obtained is sufficiently imparted with a springy new oral texture. Moreover, when rich-savor ice cream containing high milk fat and milk solids, as categorized as ice cream in the Ministerial Ordinance concerning Milk, is manufactured, it is possible to reduce milk fat ratio as well as to impart savor of interest to ice cream, thus allowing to manufacture healthy, delicious ice cream.

When soft serve ice cream is manufactured, the stirring-gelled product is blended in an amount so as to provide a high-amylose rice ratio of 1.5-4.5% by mass in total raw materials. Soft serve ice cream is semi-frozen iced at a temperature higher than that of hard ice cream as detailed later, and thus essentially has a soft, light oral texture. When soft serve ice cream with such characteristic is manufactured with setting formulation of raw materials so as to provide the above-described amount of high-amylose rice, oral texture of the soft serve ice cream thus manufactured is to be soft, springy oral texture, thus offering an entirely new soft serve ice cream that is definitely different from conventional soft serve ice cream. There is also an effect of making soft serve ice cream less likely to melt. If high-amylose rice rate is too high, the blending amount of the stirring-gelled product is to be inevitably excessive, thus making the stirring-gelled product likely to form lumps in freezing along with stirring in a soft serve ice cream manufacturing apparatus (a freezer). If the stirring-gelled product forms lumps (clumps), soft serve ice cream is likely to have a rough oral texture and to lose savor. Furthermore, inside a freezer, heating sterilization and freezing is typically repeated, but upon forming lumps from the stirring-gelled product in freezing, uneven heating is likely to occur, leading to insufficient sterilization.

Furthermore, when the extent of new oral texture to be provided for soft serve ice cream is intended to be further improved, blending amount of high-moisture stirring-gelled product is preferably determined so as to provide a water content of 12.0-17.5% per total raw materials and a high-amylose rice ratio within the aforementioned range (1.5-4.5% by mass) in total raw materials. Typically, high-moisture stirring-gelled product is blended at 15.0-21.5% by mass to total raw materials.

Manufacture of the ice cream of the present invention should just be performed using the raw materials described above in accordance with conventional known methods.

### (Manufacture of hard ice cream)

Hard ice cream is manufactured, for example, as follows.

The raw materials described above are mixed and dissolved/dispersed to prepare a water-in-oil emulsion, in a known apparatus such as an industrial mixer or a mixing tank. The temperature in mixing is not particularly limited, but is preferably 50 to 80°C in view of dissolving/dispersing the raw materials homogenously and easily.

The emulsion thus obtained is subjected to homogenization treatment and sterilization treatment. It will make no matter whether homogenization treatment or sterilization treatment is performed first. Homogenization treatment is a treatment for crushing and homogenizing milk fat, oils and fats, and the like, and is performed with a conventionally known homogenizing tool such as a homogenizer, a homomixer, or a colloid mill. Sterilization treatment can employ a known continuous heating method such as ultra-high temperature processing (UHT) sterilization or high-temperature short-time (HTST) sterilization; or a batch-type or continuous-type indirect heating method.

Then, the emulsified material after sterilization treatment is cooled. This is for avoiding such inconvenience that degeneration of the emulsified material, demulsification, and the like is likely to occur if the emulsified material after sterilization treatment is left at a high temperature. In this way, an ice-cream mix is obtained.

The ice-cream mix may be subjected to aging, as needed. Aging should just be performed by a known method.

Then, the ice-cream mix is subjected to freezing. Freezing is performed by quickly cooling the ice-cream mix in a freezer to freeze water, along with admixing a proper amount of air so as to provide a predetermined overrun (typically 60-100%). The cooling temperature at this time is at -10 to -4°C.

The ice-cream mix after freezing is filled into a container and packaged, as needed.

Then, the ice-cream mix is hardened at -20 to -40°C. In this way, hard ice cream is manufactured.

The method of manufacturing hard ice cream described above is just an example, and may be appropriately changed as needed. For example, each of the processes may be changed in the order or repeated depending on types of hard ice cream of interest, manufacturing facilities, and the like. A filtering process may also be appropriately performed in the middle of manufacturing.

Additionally, when a commercially available ice-cream mix is used as a known raw material for ice cream, a freezing process may be performed immediately after a mixing process, through no process such as homogenization. Processes after a freezing process are the same as described above.

### (Manufacture of soft serve ice cream)

In manufacturing soft serve ice cream, the same procedure is done as that of hard ice cream from a mixing process to an aging process, which is performed optionally.

Note that prior to a mixing process, a heating process is preferably performed in which the stirring-gelled product is heated at a temperature of 80 to 90°C for a minute or more to reduce its degree of viscosity. The heating process makes the stirring-gelled product into a sol form (a paste form with flowability), and can also reliably avoid an occurrence of lumps at this time. The stirring-gelled product in a sol form is referred to as a solated product.

In a subsequent mixing process, the solated product and another raw material are subjected to high-speed mixing to yield a soft serve ice cream mix. Here, the term "high-speed mixing" refers to mixing with a common industrial mixer. In contrast, the term "low-speed mixing" described later refers to mixing with a common soft serve ice cream manufacturing apparatus. Such high-speed mixing is preferably performed at 1,000 rpm or less, and particularly at 800-1000 rpm. This is because an emulsified material including raw materials dissolved/dispersed homogenously can be obtained easily and reliably. Experiments have proved that too high speed of mixing leads to less formability of soft serve ice cream, though the reason is unclear.

The high-speed mixing may be performed at a constant speed from the beginning of mixing to the end of mixing, but is preferably performed in a two-step manner in which materials are put into an industrial mixer and mixed at first at a relatively low-speed rotation (about 350-500 rpm) and then at increased mixing speed. This is for preventing a load on a mixing apparatus because the stirring-gelled product has a high degree of viscosity.

Going from a mixing process to an aging process, which is performed as needed, a soft serve ice cream mix is obtained. The soft serve ice cream mix is filled into a container using a known filling device. As a container for filling, a conventionally known packaging container should just be used such as a brick pack container, a tetra pack container, or a gable top container. Filling may or may not be under an aseptic condition.

The soft serve ice cream mix filled in a container is circulated and delivered to each store at ordinary temperature or under refrigeration condition. The soft serve ice cream mix is poured into a soft serve ice cream manufacturing apparatus (a freezer) in each store, and subjected to a freezing process. In the freezing process, the soft serve ice cream mix is cooled along with low-speed mixing so as to incorporate a proper amount of air. The low-speed mixing is preferably performed at a low speed of 0.5-5.0 rpm. The cooling temperature is preferably at -10 to -4°C. This is because setting of the mixing speed and cooling temperature within such range allows soft serve ice cream to contain air so as to provide a predetermined overrun (typically 30-80%).

Inside a soft serve ice cream manufacturing apparatus, heating sterilization may be performed around the same time as cooling.

In this way, a semi-frozen iced, creamy, soft serve ice cream is obtained without a hardening process. The soft serve ice cream drawn from a freezer is typically served toweringly in a spiral shape on a container such as a cone cup, and supplied to a consumer.

The method of manufacturing soft serve ice cream described above is also just an example, and may be appropriately changed as needed. For example, each of the process may be changed in the order and may be repeated. A filtering process and the like may also be appropriately added in the middle of manufacturing.

Additionally, when a commercially available soft serve ice cream mix is used, a freezing process may be performed immediately after a mixing process, through no process such as homogenization. Processes after a freezing process are the same as described above.

### [Ice cream]

The ice cream of the present invention manufactured in this way is formed with containing high-amylose rice that has been cooked. Specifically, high-amylose rice that has been cooked is contained in an amount so as to provide a content ratio of high-amylose rice of 1.5 to 4.5% by mass.

When the ice cream of the present invention is soft serve ice cream, high-amylose rice that has been cooked is contained in an amount so as to provide a content ratio of high-amylose rice of 1.5-4.5% by mass; specifically, the high-moisture stirring-gelled product is preferably kneaded together in an amount so as to provide a water content per total raw materials of 12.0-17.5% by mass under a condition that the content ratio of high-amylose rice is 1.5-4.5% by mass. In this case, the high-moisture stirring-gelled product is typically contained at 15.0-21.5% by mass in the entire soft serve ice cream.

When the stirring-gelled product is kneaded in the above-described amount into soft serve ice cream, such soft serve ice cream is imparted with a soft, springy, new oral texture that is completely different from conventional soft serve ice cream. Presence or absence and an extent of a new oral texture can be comprehensively evaluated by, for example, overrun, degree of viscosity, hardness, and the like of soft serve ice cream just after manufacturing.

### [Soft serve ice cream mix]

Soft serve ice cream mix obtained during manufacture of soft serve ice cream (hereinafter referred to as soft serve ice cream mix of the present invention) also contains stirring-gelled product of high-amylose rice that has been cooked. The content ratio of the stirring-gelled product is determined by the amount of high-amylose rice contained in soft serve ice cream of interest, but is typically within the range of 10-30% by mass to total soft serve ice cream mix.

The soft serve ice cream mix of the present invention preferably has an appropriate degree of viscosity. If the degree of viscosity is too low, soft serve ice cream is unlikely to be imparted with a sufficient new oral texture. If the degree of viscosity is too high, a soft serve ice cream manufacturing apparatus (a freezer) is under a load during low-speed mixing in the apparatus, and inconvenience is likely to arise such as a motor being damaged.

### Examples

Hereinafter, the present invention will be specifically described with reference to the Examples, but the present invention is not limited to the following Examples.

In the following Examples, only the examples having a content ratio of the high-amylose cooked rice having gelatinized form of 1.5 to 4.5% by mass are part of the present invention.

The Examples wherein the content ratio of the high-amylose cooked rice having gelatinized form that is outside 1.5 to 4.5% by mass are not part of the present invention.

Therefore, in the following Examples:
- examples 1-4 fall within claim 1.
- examples 5-15 do not fall within claim 1.
- examples 16-19 fall within claim 1.
- examples 20-30 do not fall within claim 1.

### [Experimental Example 1]

A commercially available soft serve ice cream mix (product name: Hokkaido Softcream Mix; manufacturer: manufactured by Nissei Co., Ltd.) was prepares as the soft serve ice cream mix base A. The soft serve ice cream mix base A contained raw milk, saccharide (sugar, dextrin), cream, powdered fat-free milk, butter, an emulsifier, stabilizers (cellulose, polysaccharide thickener), casein Na, phosphoric salt (Na, K), and carotene pigment. The content ratio of nonfat solids was 10.0% by mass, the content ratio of milk fat was 8.0% by mass, and the content ratio of raw milk was 60% by mass. The soft serve ice cream mix base A was stored at ordinary temperature.

Meanwhile, the stirring-gelled product A (product name: Rice gelee white rice soft type; manufacturer: Rice Technology Kawachi Co., Ltd.) obtained by cooking and mechanically stirring white rice of high-amylose rice (an amylose content of 25% or more by mass) was also prepared. The stirring-gelled product A was one in which cooked rice derived by cooking high-amylose rice and water in a ratio of 1:4 by weight was mechanically stirred to cause phase transition to a gel form. The stirring-gelled product A was stored at 0 to 10°C just before using.

### (Solation of stirring-gelled product)

The stirring-gelled product A was removed from a refrigerating apparatus and warmed by double boiling. Double boiling was kept while the central temperature of the stirring-gelled product A reached 85°C and such condition was maintained for 5 minutes or more. As a result, the stirring-gelled product A formed a sol form (a paste form) with flowing softness. This is referred as solated product A.

### (Mixing)

Then, 200g of the solated product A and 1,000 ml (1,100 g) of the soft serve ice cream mix base A stored at room temperature were subjected to high-speed mixing. For the high-speed mixing, an industrial mixer (product name: VitamixPRO750; manufacturer: Vitamix) was used.

In the high-speed mixing, first, all of the soft serve ice cream mix A and a half amount (100 g) of the solated product A were put into the industrial mixer, and mixed at low-speed rotation (Variable mode) for 90 seconds or more. Homogenous mixing of the materials in the mixer was checked, and the remaining 100 g of the solated product A was poured and mixed at a high-speed rotation (High mode) for 90 seconds or more. In this way, a soft serve ice cream mix was obtained.

The same mixing procedures were repeated to prepare 3,900 g of the soft serve ice cream mix.

### (Sterilization)

Next, all of the soft serve ice cream mix thus obtained was poured into a soft serve ice cream manufacturing apparatus (product name: Freezer NA9424AE (for a voltage of 200 V); manufacturer: Nissei Co., Ltd.), and subjected to heating (68°C) sterilization treatment along with mixing for 2 hours. A portion of the soft serve ice cream mix after sterilization treatment was scooped with a spatula, and checked visually for the absence of formation of "lumps" derived from the stirring-gelled product and the like.

### (Freezing)

Then, freezing was performed by cooling the materials put into the soft serve ice cream manufacturing apparatus along with low-speed mixing. One hour after the onset of freezing, soft serve ice cream was complete with 42% of overrun (air content) and a product temperature of -5.1°C, which are compliant with the standard for ice cream. Here, the term "product temperature" means a soft serve ice cream temperature at serving just after removing from a freezer.

### (Serving)

About 70 g of the soft serve ice cream was drawn from the apparatus and piled up stepwise in a spiral shape on a container to serve with two and a half steps.

### (Evaluation)

The served soft serve ice cream was assessed by a sensory evaluation for eating quality. The results were shown in Table 1. Criteria is as follows. Findings of perception in the assessment of eating quality were described together in Table 1.
⊚: Feeling springy.
∘: Feeling slightly springy.
×: Not feeling springy.

Assessment of sanitation management was also performed. Specifically, availability of sterilization treatment at manufacture of the soft serve ice cream was assessed as the following criteria.
∘: Having no lumps and capable of sterilization.
×: Generating lumps and incapable of ensuring sterilization.

Assessment of mixing property was also performed. Specifically, capability of mixing in a soft serve ice cream manufacturing apparatus was assessed as the following criteria. Mixing property was assessed using the soft serve ice cream manufacturing apparatus for a voltage of 200 V described above, and a soft serve ice cream manufacturing apparatus for a voltage of 100 V (product name:NA-1412AE; manufacturer: Nissei Co., Ltd.).
∘: Capable of mixing.
×: Putting a load on the apparatus and incapable of mixing.

### [Experimental Examples 2-7]

Soft serve ice cream was manufactured in the same manner as Experimental Example 1, except that the blending amount of the stirring-gelled product A was changed to the amount shown in Table 1.

Furthermore, the soft serve ice cream thus manufactured was subjected to various assessments in the same manner as Experimental Example 1. The results are shown in Table 1.

### [Experimental Example 8]

Soft serve ice cream was manufactured in the same manner as Experimental Example 1, except for using the stirring-gelled product B instead of the stirring-gelled product A. The stirring-gelled product B was a stirring-gelled product obtained by mechanically stirring cooked rice that is derived by cooking white rice of high-amylose rice and water in proportionately in a ratio of 1:2 by weight (product name: Rice gelee white rice hard type; manufacturer: Rice Technology Kawachi Co., Ltd).

Furthermore, the soft serve ice cream thus manufactured was subjected to various assessments in the same manner as Experimental Example 1. The results are shown in Table 1.

### [Experimental Examples 9-14]

Soft serve ice cream was manufactured in the same manner as Experimental Example 8, except that the blending amount of the stirring-gelled product B was changed to the amount shown in Table 1.

Furthermore, the soft serve ice cream thus manufactured was subjected to various assessments in the same manner as Experimental Example 8. The results are shown in Table 1.

### [Experimental Example 15]

Soft serve ice cream was manufactured in the same manner as Experimental Example 1, except for using the stirring-gelled product C instead of the stirring-gelled product A. The stirring-gelled product C was a stirring-gelled product obtained by mechanically stirring cooked rice that is derived by cooking brown rice of high-amylose rice and water in proportionately in a ratio of 1:4 by weight (product name: Rice gelee brown rice soft type; manufacturer: Rice Technology Kawachi Co., Ltd).

Furthermore, the soft serve ice cream thus manufactured was assessed in the same manner as Experimental Example 1, for mixing property in use of the soft serve ice cream manufacturing apparatus for a voltage of 200 V. The results are shown in Table 1.

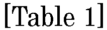

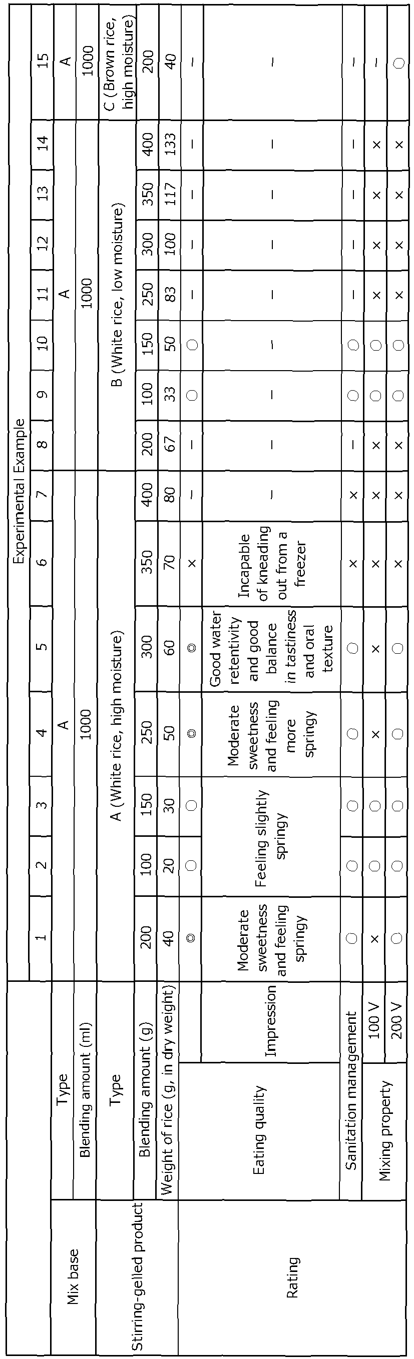

### [Experimental Example 16]

Next, an experiment was performed in which the type of soft serve ice cream mix base was changed. Specifically, soft serve ice cream was manufactured in the same manner as Experimental Example 1, except for using the soft serve ice cream mix base B (product name: Sofore mix, manufacturer: Nissei Co., Ltd.) instead of the soft serve ice cream mix base A. Though the ingredient description of the soft serve ice cream mix base B was the same as that of the soft serve ice cream mix base A, it was confirmed in advance that soft serve ice cream made only from the soft serve ice cream mix base B has a savor lighter than soft serve ice cream made only from the soft serve ice cream mix base A. The content ratio of nonfat milk solids was 10.00% by mass, the content ratio of milk fat was 8.00% by mass, and the content ratio of raw milk was 60% by mass.

Furthermore, the soft serve ice cream thus manufactured was subjected to various assessments in the same manner as Experimental Example 1. The results are shown in Table 2.

### [Experimental Examples 17-22]

Soft serve ice cream was manufactured in the same manner as Experimental Example 16, except that the blending amount of the stirring-gelled product A was changed to the amount shown in Table 2.

Furthermore, the soft serve ice cream thus manufactured was subjected to various assessments in the same manner as Experimental Example 16. The results are shown in Table 2.

### [Experimental Example 23]

Soft serve ice cream was manufactured in the same manner as Experimental Example 16, except for using the stirring-gelled product B instead of the stirring-gelled product A.

Furthermore, the soft serve ice cream thus manufactured was subjected to various assessments in the same manner as Experimental Example 16. The results are shown in Table 2.

### [Experimental Examples 24-29]

Soft serve ice cream was manufactured in the same manner as Experimental Example 23, except that the blending amount of the stirring-gelled product B was changed to the amount shown in Table 2.

Furthermore, the soft serve ice cream thus manufactured was subjected to various assessments in the same manner as Experimental Example 23. The results are shown in Table 2.

### [Experimental Example 30]

Soft serve ice cream was manufactured in the same manner as Experimental Example 16, except for using the stirring-gelled product C instead of the stirring-gelled product A.

Furthermore, the soft serve ice cream thus manufactured was assessed in the same manner as Experimental Example 16, for mixing property in use of the soft serve ice cream manufacturing apparatus for a voltage of 200 V. The results are shown in Table 2.

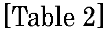

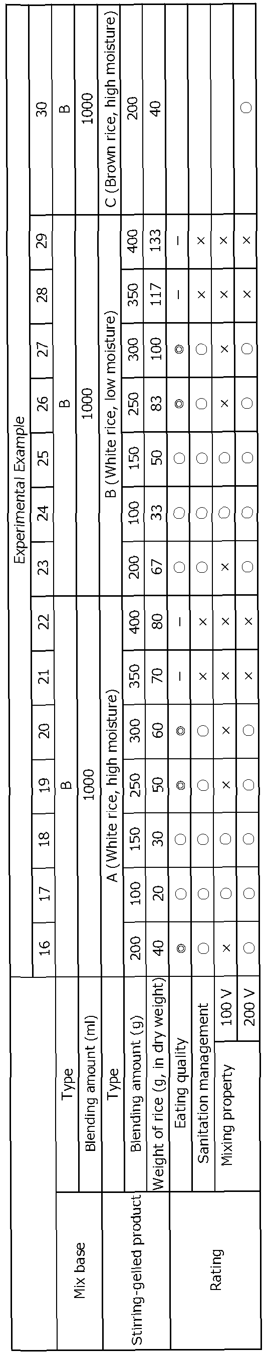

## Claims

1. An soft serve ice cream comprising high-amylose cooked rice having gelatinized form,
wherein a content ratio of the high-amylose cooked rice is 1.5 to 4.5% by mass.

2. The soft serve ice cream according to claim 1, comprising a gelatinous product, wherein said gelatinous product is obtained by stirring the high-amylose cooked rice and water, and is kneaded in the soft serve ice cream along with other raw materials, the gelatinous product containing water that constitutes 12.0 to 17.5% by mass of total raw materials.

3. The soft serve ice cream according to claim 1 or 2,
wherein a content ratio of the gelatinous product is 10 to 30% by mass.

4. A method of manufacturing a soft serve ice cream of any one of claims 1 to 3, comprising:
heating to solate a gelatinous product of cooked high-amylose rice at a temperature of 80 to 90°C for one or more minutes to obtain a solated product; and
mixing the solated product with other raw materials for the soft serve ice cream at a highspeed to obtain a soft serve ice cream mix.

5. The method of manufacturing a soft serve ice cream according to claim 4, wherein the mixing high speed is at 1000rpm or less, and particularly at 800-1000 rpm.

6. The method of manufacturing a soft serve ice cream according to claim 4 or 5, further comprising freezing after the mixing, in which the soft serve ice cream mix is cooled at a temperature of -10 to -4°C while mixed at a low speed.

7. The method of manufacturing a soft serve ice cream according to claim 6, wherein the mixing low speed is at 0.5 to 5 rpm.

## Patentansprüche

1. Softeis, das gekochten Reis mit hohem Amylosegehalt mit gelatinierter Form umfasst,
wobei ein Gehaltsanteil des gekochten Reises mit hohem Amylosegehalt 1,5 bis 4,5 Masse-% beträgt.

2. Softeis nach Anspruch 1, das ein gelatinöses Produkt umfasst, wobei das gelatinöse Produkt durch Rühren des gekochten Reises mit hohem Amylosegehalt und Wasser erhalten wird und in dem Softeis gemeinsam mit anderen Rohstoffen geknetet wird, wobei das gelatinöse Produkt Wasser enthält, das 12,0 bis 17,5 Masse-% der Gesamtrohstoffe ausmacht.

3. Softeis nach Anspruch 1 oder 2,
wobei ein Gehaltsanteil des gelatinösen Produkts 10 bis 30 Masse-% beträgt.

4. Verfahren zur Herstellung eines Softeises nach einem der Ansprüche 1 bis 3, umfassend:
Erhitzen zum Solieren eines gelatinösen Produkts aus gekochtem Reis mit hohem Amylosegehalt bei einer Temperatur von 80 bis 90°C während einer oder mehrerer Minuten, um ein soliertes Produkt zu erhalten; und
Mischen des solierten Produkts mit anderen Rohstoffen für das Softeis bei einer hohen Drehzahl, um eine Softeismischung zu erhalten.

5. Verfahren zur Herstellung eines Softeises nach Anspruch 4, wobei die Höchstmischdrehzahl 1000 U/min oder niedriger und insbesondere 800 bis 1000 U/min beträgt.

6. Verfahren zur Herstellung eines Softeises nach Anspruch 4 oder 5, das ferner das Einfrieren nach dem Mischen umfasst, wobei das Softeis bei einer Temperatur von -10 bis -4°C gekühlt und dabei mit einer niedrigen Drehzahl gemischt wird.

7. Verfahren zur Herstellung eines Softeises nach Anspruch 6, wobei die niedrige Mischdrehzahl etwa 0,5 bis 5 U/min beträgt.

## Revendications

1. Crème glacée molle comprenant du riz cuit à forte teneur en amylose ayant une forme gélatinisée,
dans laquelle la proportion en contenu du riz cuit à forte teneur en amylose est de 1,5 à 4,5 % en masse.

2. Crème glacée molle selon la revendication 1, comprenant un produit gélatineux, dans laquelle ledit produit gélatineux est obtenu par agitation du riz cuit à forte teneur en amylose et d'eau, et est malaxé dans la crème glacée molle conjointement avec d'autres matières premières, le produit gélatineux contenant de l'eau qui constitue 12,0 à 17,5 % en masse des matières premières totales.

3. Crème glacée molle selon la revendication 1 ou 2,
dans laquelle la proportion en contenu du produit gélatineux est de 10 à 30 % en masse.

4. Procédé de fabrication d'une crème glacée molle de l'une quelconque des revendications 1 à 3, comprenant :
un chauffage jusqu'à solation d'un produit gélatineux de riz cuit à forte teneur en amylose, à une température de 80 à 90°C pendant une ou plusieurs minutes pour que soit obtenu un produit ayant subi une solation ; et
mélange du produit ayant subi une solation avec d'autres matières premières pour la crème glacée molle à une vitesse élevée pour que soit obtenu un mélange de crème glacée molle.

5. Procédé de fabrication d'une crème glacée molle selon la revendication 4, dans lequel le mélange à vitesse élevée est à 1 000 t/min ou moins, et en particulier à 800 à 1 000 t/min.

6. Procédé de fabrication d'une crème glacée molle selon la revendication 4 ou 5, comprenant en outre une congélation après le mélange, dans lequel le mélange de crème glacée molle est refroidi à une température de -10 à -4°C tout en étant mélangé à basse vitesse.

7. Procédé de fabrication d'une crème glacée molle selon la revendication 6, dans lequel la basse vitesse de mélange est de 0,5 à 5 t/min.
